# DEMANDE DE BREVET EUROPEEN

(11) **EP 1 216 882 A1**
(43) Date de publication de la demande: **26.06.2002**
(21) Numéro de dépôt: 01402900.3
(22) Date de dépôt: 12.11.2001
(51) Int. Cl.: B60Q 1/12

(54) **Projecteur tournant pour véhicule automobile comportant une lampe à deux sources**

(30) Priorité: 20.12.2000 FR 0016647
(71) Demandeur: VALEO VISION, 93012 Bobigny Cédex (FR)
(72) Inventeur: Nouet, Régis, 93012 Bobigny Cedex (FR); Hidden, Philippe, 93012 Bobigny Cedex (FR)
(74) Mandataire: Hervouet, Sylvie

(57) **Abrégé**

Le projecteur pour véhicule comprend un support (6), une lampe présentant des première et seconde sources (5), ainsi que des première (20) et seconde (12) surfaces réfléchissantes aptes à coopérer avec les première et seconde sources pour émettre des premier et second faisceaux, la première surface (20) est apte à être déplacée à rotation (R) autour d'un axe (A1) par rapport au support de sorte que, lors d'une trajectoire courbe suivie par le véhicule, le premier faisceau est apte à être orienté vers l'intérieur de la courbe.

## Description

L'invention concerne un projecteur de véhicule automobile destiné à apporter une fonction additionnelle d'éclairage.

Le document FR-2 694 373 divulgue un projecteur pour véhicule automobile permettant de réaliser deux fonctions d'éclairage différentes, comme la fonction éclairage pour l'antibrouillard et la fonction éclairage pour la route. Cependant, ce type de projecteur est fixe et, de ce fait, n'éclaire que dans l'axe du véhicule. Cela est efficace lorsque le véhicule suit une trajectoire rectiligne, les projecteurs éclairant parfaitement les lieux futurs de position du véhicule. Mais lorsque le véhicule effectue des trajectoires non rectilignes comme lors des virages de la route, le projecteur fixe ne peut éclairer les lieux futurs du véhicule. Une solution consisterait pour cela à prévoir un projecteur spécifique, ce qui augmenterait le nombre de projecteurs dans un volume disponible à l'avant des véhicules limité.

Un but de l'invention est de fournir un projecteur capable d'émettre un faisceau de lumière pour éclairer des lieux futurs de position d'un véhicule lors de trajectoires non rectilignes sans qu'il y ait augmentation de la surface des projecteurs du véhicule.

Pour cela, on prévoit un projecteur pour véhicule comprenant un support, une lampe présentant des première et seconde sources, ainsi que des première et seconde surfaces réfléchissantes aptes à coopérer avec les première et seconde sources pour émettre des premier et second faisceaux de lumière, la première surface est apte à être déplacée à rotation autour d'un axe par rapport au support de sorte que, lors d'une trajectoire courbe suivie par le véhicule, le premier faisceau de lumière s'oriente vers l'intérieur de la courbe.
Ainsi, les lieux futurs de position du véhicule sont toujours éclairés par le projecteur. L'utilisation d'une lampe à deux sources permet d'obtenir deux fonctions différentes d'éclairage dans un seul projecteur et ainsi de ne pas augmenter la surface d'optique du véhicule.

Avantageusement, la première surface réfléchissante s'étend en partie supérieure du projecteur.

Avantageusement, la seconde surface réfléchissante est fixe par rapport à la première surface.

Avantageusement, le projecteur est mobile à rotation autour dudit axe.

Avantageusement, l'axe est destiné à s'étendre verticalement lors du fonctionnement du projecteur.

Avantageusement, la première surface comporte une pluralité de zones distinctes.

Avantageusement, les zones sont juxtaposées latéralement les unes aux autres et sont délimitées par des lignes de transition à rupture de pente.

Avantageusement, la seconde surface est définie par une portion de paraboloïdes dont le foyer se situe au voisinage de la lampe et l'axe sensiblement parallèle à un axe principal du projecteur.

Avantageusement, le premier faisceau présente une coupure.

Avantageusement, le second faisceau correspond à une fonction d'éclairage route.

Avantageusement, le projecteur comprend une coupelle associée à la première surface pour émettre le premier faisceau en coopération avec la lampe.

On prévoit selon l'invention un ensemble comportant un projecteur, présentant une ou plusieurs de caractéristiques précédentes, ainsi qu'un organe de commande de rotation de la première surface.

Avantageusement, l'organe de commande est agencé de sorte que la rotation est fonction de l'amplitude de manoeuvre d'un organe de direction du véhicule par un conducteur.

Avantageusement, l'organe de commande est agencé de sorte que la rotation est fonction d'une vitesse du véhicule.

Avantageusement, l'organe de commande est agencé de sorte que l'état allumé ou éteint du premier faisceau est fonction de l'amplitude de manoeuvre d'un organe de direction du véhicule par un conducteur.

Avantageusement, l'organe de commande est agencé de sorte que le second faisceau est apte à rester allumé lors de la rotation.

On prévoit aussi selon l'invention un véhicule comportant au moins un projecteur ou un ensemble qui comprend au moins l'une des caractéristiques précitées.

D'autres caractéristiques et avantages de l'invention apparaîtront lors de la description ci-après d'un mode préféré de réalisation. Aux dessins annexés :
- la figure 1 est une vue de face schématique d'un projecteur selon le mode préféré de réalisation de l'invention ;
- la figure 2a, 2b, 2c et 2d illustrent par un ensemble de courbes isocandela sur un écran de projection le comportement optique de différentes zones de la surface supérieure du réflecteur du projecteur de la figure 1 ;
- la figure 3 illustre par un ensemble de courbes isocandela l'allure du faisceau engendré par l'ensemble des zones de la surface supérieure du réflecteur du projecteur de la figure 1 ;
- la figure 4 illustre par un ensemble de courbes isocandela l'allure du faisceau engendré par la seconde source en coopération avec le réflecteur du projecteur de la figure 1 ;
- la figure 5 est une vue schématique de dessus du projecteur de la figure 1 ; et,
- la figure 6 est une représentation schématique des différentes zones éclairées par un projecteur selon l'invention.

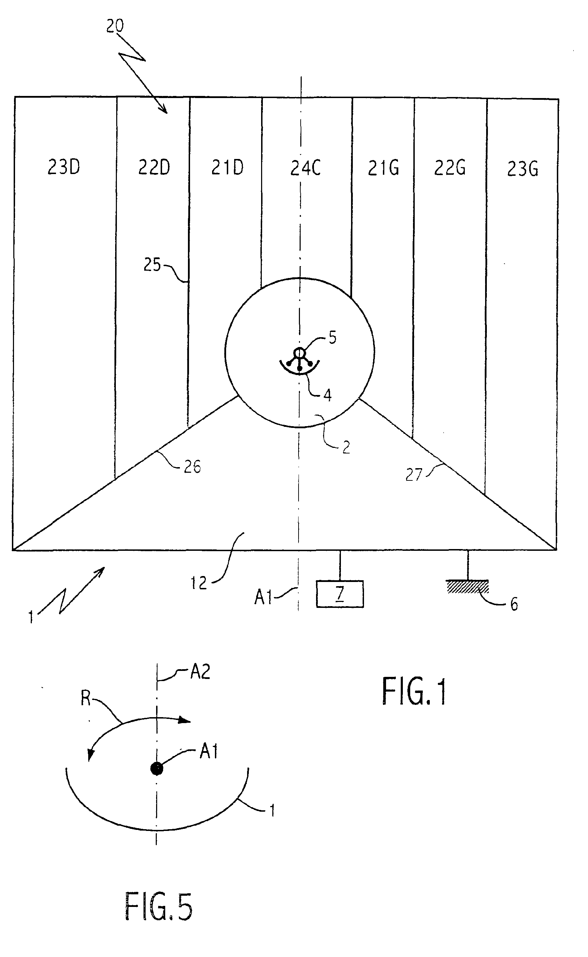

En référence à la figure 1, le projecteur 1 comporte un support 6, ainsi qu'un réflecteur comprenant deux surfaces principales inférieure 12 et supérieure 20. Ce projecteur 1 comporte en outre une lampe 2. Le projecteur 1 est apte à être commander par un organe de commande 7.

La lampe 2 comporte une double source lumineuse 5 sous la forme d'une paire de filaments, ainsi qu'une coupelle 4 apte à occulter et renvoyer le rayonnement se dirigeant vers la partie inférieure du projecteur et issue de l'un des deux filaments de la double source lumineuse 5. Par exemple, la lampe 2 peut être, de manière préférentielle, une lampe de type H4 du commerce.

La surface inférieure 12 est ici une surface en forme de paraboloïde de révolution dont le foyer se situe à proximité de l'un des deux filaments 5, de préférence le filament dont la partie de rayonnement se dirigeant vers la partie inférieure du projecteur n'est pas occulté par la coupelle 4. Le paraboloïde a pour axe de révolution, l'axe principal A2 du projecteur 2. L'axe A2 est sensiblement horizontal. La surface 12 est dédiée à la fonction route du projecteur 1. La surface 12 rejoint la surface supérieure 20 selon des lignes de transition 26 et 27. La constitution d'un tel réflecteur dit « à surfaces complexes » est décrite en détails dans le document FR-2 694 373 auquel on pourra se référer.

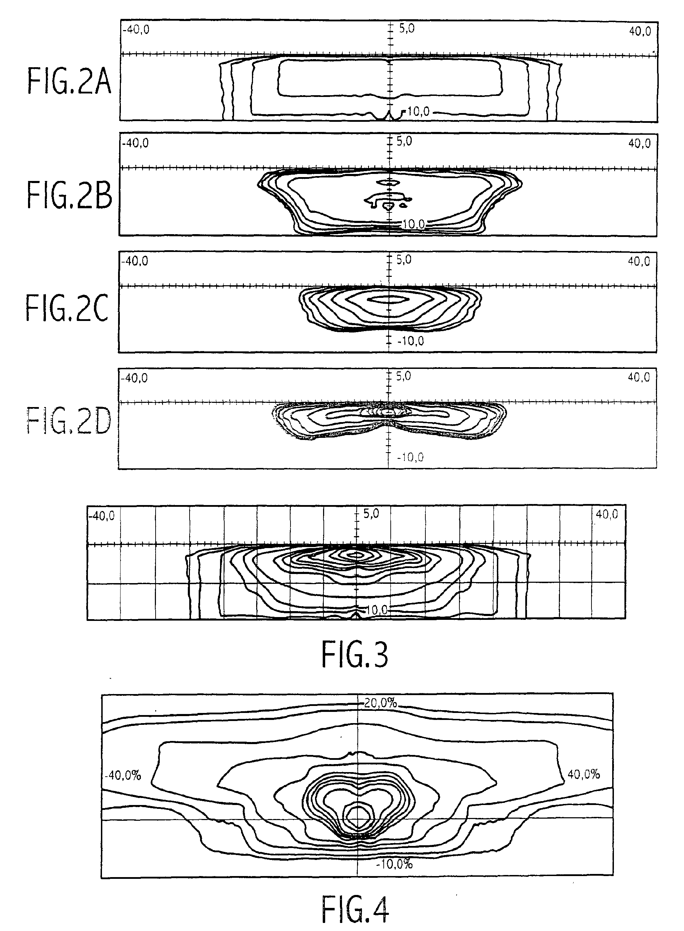

La figure 4 présente un ensemble de courbes isocandela illustrant le comportement optique de la surface inférieure 12 ainsi que de la surface supérieure 20 du projecteur 1, toutes deux en coopération avec la seconde source lumineuse. Comme on peut le voir, la surface inférieure 12 ne peut être utilisée que lors de la fonction route. En effet, elle présente un rayonnement lumineux au-dessus de la ligne d'horizon correspondant à l'axe horizontal du repère. Et comme on le sait, un faisceau de croisement à coupure est limité en partie supérieure par deux demi-plans dont l'un est confondu avec la ligne d'horizon, et ce aussi bien pour un faisceau conforme aux règlements européens que pour un faisceau conforme aux règlements des Etats Unis d'Amériques, formant ainsi la limite au-dessus de laquelle aucun rayonnement ne doit être émis pour la fonction croisement utilisée lors de la venue de véhicules en sens inverse.

De nouveau en référence à la figure 1, la surface 20 s'étend principalement en partie supérieure du projecteur 1 à partir des lignes de transition 26 et 27. La surface 20 comprend une pluralité de zones de surface réfléchissante 21d, 21g, 22d, 22g, 23d, 23g et 24c. Ces zones de surface réfléchissante sont réparties de manière symétrique en miroir selon le plan médian vertical du projecteur 1. Ces zones de surface réfléchissante sont allongées verticalement, juxtaposées latéralement les unes aux autres et délimitées par des lignes de transition à rupture de pente 25. Le détail de la constitution de la surface supérieure 20 du projecteur 1 est décrit dans le texte de la demande de brevet d'invention français n° FR 2 760 067 auquel on pourra se référer pour plus de détails. Cette surface est destinée à coopérer avec l'autre filament de la lampe.

La figure 2a présente un ensemble de courbes isocandela sur un écran de projection illustrant le comportement optique de la zone médiane 24c. La figure 2b présente un ensemble de courbes isocandela illustrant le comportement optique des zones 21d et 21g. La figure 2c présente un ensemble de courbes isocandela illustrant le comportement optique des zones 22d et 22g. Enfin, la figure 2d présente un ensemble de courbes isocandela illustrant le comportement optique des zones 23d et 23g. Comme on peut le remarquer sur ces figures la surface supérieure 20 permet d'obtenir une ligne de coupure horizontale, schématisée par l'axe horizontal du repère, compatible avec une projection de faisceau lumineux apte à permettre le croisement de deux véhicules. En effet, les courbes des figures 2a à 2d montrent qu'il n'y a pas d'émission de faisceaux lumineux au-dessus de la coupure horizontale, ce qui permet de ne pas éblouir les usagers des véhicules venant en sens inverse. La figure 3 présente un ensemble de courbes isocandela illustrant le comportement de l'intégralité de la surface supérieure 20 du projecteur 1.

En résumé, la fonction virage est réalisée par la coopération de la première source lumineuse avec la surface supérieure 20, alors que la fonction route est réalisée par la coopération de la seconde source lumineuse avec principalement la surface inférieure 12.

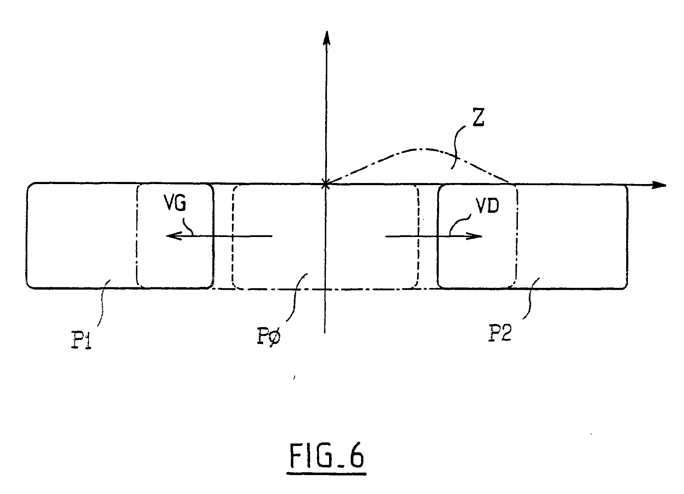

Lors de son utilisation, le projecteur 1 est apte à être mobile en rotation dans son ensemble (notamment le réflecteur et la lampe) autour d'un axe vertical A1, comme cela est illustré de manière schématique à la figure 5. De préférence, l'axe A1 est contenu dans le plan vertical médian du projecteur 1 et est perpendiculaire à l'axe A2. La rotation R du projecteur autour de l'axe A1 est fonction de différents paramètres :
- le premier paramètre est la courbure de la trajectoire que suit le véhicule. L'importance de cette courbure est mesurable à partir de l'angle effectué par le volant de direction manoeuvré par l'utilisateur du véhicule pour faire suivre audit véhicule la trajectoire.
- le deuxième paramètre est la vitesse du véhicule qui va permettre de moduler l'importance de la rotation R du projecteur 1.

D'autres paramètres pourront éventuellement être pris en compte. Parmi ceux-ci, si le véhicule est équipé d'un système GPS (Global Positionning System ou Système de positionnement global), les informations issues de ce système GPS pourront être utilisés pour déterminer l'importance de la rotation R que devra effectuer le projecteur 1.

La mise en rotation du projecteur 1 autour de l'axe A1 est effectuée par l'organe de commande 7 comportant des moyens de mise en rotation. Ces moyens de mise en rotation peuvent être divers et variés comme un motoréducteur ou un servomoteur piloté électroniquement et/ou informatiquement en fonction des paramètres précités. Les moyens de mise en rotation sont connus en tant que tels et peuvent être réalisés sans difficulté par l'homme du métier.

On a illustré à la figure 6 différentes configurations de faisceaux, parmi lesquels des faisceaux produits par le projecteur qui vient d'être décrit.
On a ainsi représenté un faisceau de croisement à coupure de type européen illuminant une zone Z. Ainsi la coupure est définie à gauche par un demi-plan horizontal s'étendant sur la ligne d'horizon et à droite par un demi-plan incliné relevé vers le haut à partir de l'axe optique, pour un sens de circulation à droite.
Lors de la conduite en ligne droite, le projecteur produit le faisceau de route de la figure 4, au moyen de l'ensemble du réflecteur et du second filament de la lampe, l'autre filament étant éteint. (Toutefois, on pourra prévoir en option que cet autre filament est allumé, produisant ainsi en supplément un faisceau P0, illustré aux figures 3 et 6, inclus dans la zone Z.)
Lors de la conduite sur un virage à gauche ou à l'abord d'un virage à gauche, le faisceau de route est conservé, tandis que, sous l'action de l'organe de commande 7, s'allume le filament associé à la zone supérieure 20, produisant ainsi le faisceau de la figure 3. En même temps le réflecteur pivote par rapport au véhicule autour de l'axe A1 vers la gauche en direction de la courbure, de façon à éclairer le virage dans une zone P1 décalée vers la gauche par rapport à l'axe optique du projecteur. A la fin du virage, le projecteur pivote vers la droite pour reprendre sa position d'origine et le filament associé à la zone supérieure 20 s'éteint, le faisceau de route demeurant seul allumé, le tout, sous l'action de l'organe commande 7.
Il se produit un fonctionnement analogue en cas de virage à droite, celui-ci étant éclairé sur une zone P2.
Bien entendu, ce qui vient d'être décrit est valable pour chacun des deux projecteurs route-virage du véhicule.
De plus, le véhicule comprend deux autres projecteurs (ou deux sous-ensembles intégrés à ces projecteurs) aptes à former un faisceau de croisement fixe. Le projecteur route-virage de l'invention vient en complément du faisceau de croisement fixe dans une zone où ce dernier n'est pas actif. Ainsi lors d'un virage à droite VD, la fonction virage est activée pour aller illuminer une zone P2 du virage hors de la zone Z. De même, lors d'un virage à gauche VG, la fonction virage illumine une zone P1 hors de la zone Z d'illumination du projecteur fixe de croisement.

D'autre part, le projecteur est agencé de sorte que l'état allumé ou éteint de la source lumineuse 5 située au-dessus de la coupelle 4, qui est seule responsable de la fonction virage réalisée en coopération avec la surface supérieure 20, est fonction de la rotation du volant de direction manoeuvré par l'usager du véhicule.

De plus, la seconde source lumineuse est prévue pour rester allumée lors de la rotation du projecteur 1 autour de l'axe A1 lorsque la fonction route est activée.

On pourra bien évidemment apporter de nombreuses modifications à l'invention sans pour autant sortir du cadre de celle-ci. On pourra par exemple envisager que :
- seule la surface supérieure 20 (et non la surface inférieure 12) du projecteur 1 est apte à tourner autour de l'axe A1 de rotation pour effectuer la rotation R ;
- la surface supérieure ou le projecteur est apte à tourner par rapport à la ou aux sources lumineuses ;
- la surface inférieure est une surface complexe sans coupure ;
- le projecteur reprend sa position d'origine pour émettre le faisceau route, et ce dans tous les cas ;
- la ou les sources lumineuses sont fixes par rapport à la surface supérieure ou au projecteur ;
- la lampe de type H4 peut être remplacée par une lampe halogène quelconque à deux sources , ou encore par une lampe à deux arcs.

## Revendications

1. Projecteur pour véhicule, comprenant un support (6), une lampe présentant des première et seconde sources (5), ainsi que des première (20) et seconde (12) surfaces réfléchissantes aptes à coopérer avec les première et seconde sources pour émettre des premier et second faisceaux, **caractérisé en ce qu'**au moins la première surface (20) est apte à être déplacée à rotation (R) autour d'un axe (A1) par rapport au support, de sorte que, lors d'une trajectoire courbe suivie par le véhicule, le premier faisceau est apte à être orienté vers l'intérieur de la courbe.

2. Projecteur selon la revendication 1, **caractérisé en ce que** la première surface réfléchissante (20) s'étend en partie supérieure du projecteur.

3. Projecteur selon la revendication 1 ou 2, **caractérisé en ce que** la seconde surface réfléchissante (12) est fixe par rapport à la première surface.

4. Projecteur selon la revendication 3 **caractérisé en ce qu'**il est mobile à rotation autour dudit axe (A1).

5. Projecteur selon la revendication 4 **caractérisé en ce que** l'axe (A1) est destiné à s'étendre verticalement lors du fonctionnement du projecteur.

6. Projecteur selon l'une des revendications précédentes, **caractérisé en ce que** la première surface (20) comporte une pluralité de zones distinctes (21D, 21G, 22D, 22G, 23D, 23G, 24C).

7. Projecteur selon la revendication 6, **caractérisé en ce que** les zones de surfaces sont juxtaposées latéralement les unes aux autres et sont délimitées par des lignes de transition (25) à rupture de pente.

8. Projecteur selon l'une des revendications précédentes, **caractérisé en ce que** la seconde surface est définie par une portion de paraboloïde ayant un foyer situé au voisinage de la lampe et d'axe sensiblement parallèle à un axe principal (A2) du projecteur.

9. Projecteur selon l'une des revendications précédentes, **caractérisé en ce que** le premier faisceau présente une coupure.

10. Projecteur selon l'une des revendications précédentes, **caractérisé en ce que** le second faisceau correspond à une fonction d'éclairage route.

11. Projecteur selon l'une des revendications précédentes, **caractérisé en ce qu'**il comprend une coupelle (4) associée à la première surface (20) pour émettre le premier faisceau en coopération avec la première source de la lampe.

12. Ensemble **caractérisé en ce qu'**il comporte un projecteur selon l'une des revendications précédentes et un organe de commande (7) de rotation de la première surface

13. Ensemble selon la revendication 12, **caractérisé en ce que** l'organe de commande (7) est agencé de sorte que la rotation (R) est fonction de l'amplitude de manoeuvre d'un organe de direction du véhicule par un conducteur.

14. Ensemble selon la revendication 12 ou 13, **caractérisé en ce que** l'organe de commande est agencé de sorte que la rotation (R) est fonction d'une vitesse du véhicule.

15. Ensemble selon l'une des revendications 12 à 14, **caractérisé en ce que** l'organe de commande est agencé de sorte que l'état allumé ou éteint du premier faisceau est fonction de l'amplitude de manoeuvre d'un organe de direction du véhicule par un conducteur.

16. Ensemble selon l'une des revendications 12 à 15, **caractérisé en ce que** l'organe de commande est agencé de sorte que le second faisceau est apte à rester allumé lors de la rotation (R).

17. Véhicule **caractérisé en ce qu'**il comporte au moins un projecteur selon l'une des revendications 1 à 11.

18. Véhicule **caractérisé en ce qu'**il comporte au moins un ensemble selon l'une des revendications 12 à 15.
